# EUROPÄISCHE PATENTSCHRIFT

(11) **EP 2 678 379 B1**
(45) Veröffentlichungstag und Bekanntmachung des Hinweises auf die Patenterteilung: **20.04.2016**
(21) Anmeldenummer: 12706024.2
(22) Anmeldetag: 20.02.2012
(51) Int. Cl.: C08J 9/00, C08K 3/36, C08K 7/20

(54) **MELAMINHARZSCHAUMSTOFF MIT PARTIKELFÖRMIGEM FÜLLMATERIAL**
MELAMINE RESIN FOAM HAVING PARTICULATE FILLER
MOUSSE À BASE DE RÉSINE MÉLAMINE CONTENANT UNE CHARGE PARTICULAIRE

(30) Priorität: 24.02.2011 EP 11155750
(43) Veröffentlichungstag der Anmeldung: 01.01.2014
(73) Patentinhaber: BASF SE, 67056 Ludwigshafen am Rhein (DE)
(72) Erfinder: STEINKE, Tobias Heinz, 67346 Speyer (DE); ULANOVA, Tatiana, 67063 Ludwigshafen (DE); HAHN, Klaus, 67281 Kirchheim (DE); BAUMGARTL, Horst, 67063 Ludwigshafen (DE); MÖCK, Christof, 68259 Mannheim (DE); VATH, Bernhard, 68259 Mannheim (DE); NESSEL, Peter, 67067 Ludwigshafen (DE); SCHIERHOLZ, Jens-Uwe, 64625 Bensheim (DE); WESTER, Bettina, 67133 Maxdorf (DE); QUADBECK-SEEGER, Hans-Jürgen, 67098 Bad Dürkheim (DE); PUNG, Dave, Ohio 45140 (US)
(74) Vertreter: BASF IP Association
(86) Internationale Anmeldenummer: PCT/EP2012/052835
(87) Internationale Veröffentlichungsnummer: WO 2012/113740

(56) Entgegenhaltungen:
- DE-A1- 2 352 969
- DE-A1- 2 625 056
- US-A- 3 766 100
- US-A- 4 522 878
- US-A- 4 604 448

## Beschreibung

Die vorliegende Erfindung betrifft Melaminharzschaumstoffe, Verfahren zu deren Herstellung sowie deren Verwendung.

Aus der EP-A-1 146 070 ist die Imprägnierung mit einem Ammoniumsalz und aus der WO-A-2007/23118 die Imprägnierung mit Natriumsilikat zur Verbesserung der Brandeigenschaften von Melamin-Formaldehyd-Schaumstoffen bekannt. Diese lassen jedoch in ihren mechanischen Eigenschaften noch zu wünschen übrig.

Aus der DE-A-10 2007 009127 sind faserverstärkte Schaumstoffe auf Basis von Melamin-/Formaldehyd-Harzen mit einem Faseranteil von 0,5 bis 50 Gew.-% bekannt. Als faserförmiger Füllstoff werden Kurz- oder Langfasern aus Glas, Kohlenstoff oder Melaminharz eingesetzt, das Verhältnis von Länge : Durchmesser der Fasern liegt bevorzugt im Bereich von 5:1 bis 500:1.

Aus der WO-A-2009/021963 ist ein Verfahren zur Herstellung eines abrasiven Schaumstoffs auf Basis eines Melamin-Formaldehyd-Kondensationsproduktes bekannt, welches 0,01 bis 50 Gew.-% anorganische Nanopartikel bezogen auf das Gewicht des Vorkondensats enthält. Die anorganischen Nanopartikel haben eine mittlere Partikelgröße von kleiner als 1000 nm, vorzugsweise von kleiner als 100 nm.

Die DE 23 52 969 A1 offenbart harte Schaumstoffe mit hoher Feuerwiderstandsdauer, die aus Polystyrolschaumstoffpartikeln und einer wäßrigen Melamin-Formaldehydharzlösung erhalten werden, wobei die Harzlösung einen feinteiligen anorganischen Füllstoff enthält. Der Teilchendurchmesser des Füllstoffs wird nicht spezifiziert. Der in den Beispielen offenbarte Gewichtsanteil des Füllstoffs, bezogen auf das Gesamtgewicht aus Schaumstoffpartikeln und Füllstoff, liegt immer über 70 Gew.%.

Die US 4,522,878 offenbart ein Material mit hoher mechanischer Festigkeit und einer Dichte nahe 1 g/cm³, welches aus einem ungeschäumten Melamin-Formaldehydharz und Mikrohohlkugeln mit einer nicht näher spezifizierten Abmessung im Bereich von 20 bis 200 µm erhältlich ist, wobei die Gewichtsanteile dieser Komponenten jeweils im Bereich von 10 bis 50 Gew.-%, bezogen auf das Gesamtgewicht des Materials, liegen können. Die Bildung eines Schaumstoffs wird nicht beschrieben.

Die WO 2009/056436 A2 offenbart ein Kompositmaterial, umfassend 0,01 bis 50 Gew.-% eines superabsorbierenden Polymers und 50 bis 99,99 Gew.-% eines elastischen Aminoplastschaums als Trägermaterial. Der Aminoplastschaum ist ein Melamin/Formaldehyd-Harz. Die Partikelgröße des superabsorbierenden Polymers liegt zwischen 100 und 1000 µm. Das Kompositmaterial soll superabsorbierende Eigenschaften aufweisen, Flüssigkeiten auf das gesamte superabsorbierende Material verteilen und formstabil sein.

In der Regel ist bei Schaumstoffen auf Basis eines Melamin-Formaldehyd-Kondensationsproduktes mit zunehmendem Anteil von Fasern oder Partikeln, welche zur Erzielung bestimmter Effekte wie Verbesserung der Brandeigenschaften oder optischer Effekte - beispielsweise Farbgebung - eingesetzt werden können, eine unerwünschte Abnahme der mechanischen Eigenschaften zu beobachten.

Der vorliegenden Erfindung lag daher die Aufgabe zugrunde, den zuvor genannten Nachteilen abzuhelfen, insbesondere gefüllte Melaminharzschaumstoffe bereit zu stellen, die die guten mechanischen Eigenschaften der ungefüllten Schaumstoffe weitgehend erhalten und gleichzeitig verbesserte Brandeigenschaften ggü. diesen haben.

Demgemäß wurden neue Melamin-/Formaldehyd-Schaumstoffe mit offenzelligem Schaumstoffgerüst, welches eine Vielzahl miteinander verbundener, dreidimensional verzweigter Stege enthält, bei denen partikelförmige Füllmaterialien in die Porenstruktur eingebettet sind, gefunden, die 0,01 bis 45 Gew.-% eines partikelförmigen Füllmaterials mit einem mittleren Teilchendurchmesser im Bereich von 5 µm bis 3 mm enthalten, wobei als partikelförmiges Füllmaterial anorganische Stoffe eingesetzt werden, und wobei die Gew.-% auf das Gesamtgewicht aus zur Schaumstoffherstellung eingesetztem Melamin-/Formaldehyd-Vorkondensat und partikelförmigen Füllmaterial bezogen sind.

Die erfindungsgemäßen Melamin-/Formaldehyd-Schaumstoffe enthalten 0,01 bis 45 Gew. %, bevorzugt 1 bis 30 Gew. %, besonders bevorzugt 5 bis 20 Gew. %, eines oder mehrerer, also 1 bis 10, bevorzugt 1 bis 5, besonders bevorzugt 1 bis 3, insbesondere 1 oder 2, ganz besonders bevorzugt 1 partikelförmiger Füllmaterialien, wobei die Gew.-% jeweils auf das Gesamtgewicht aus zur Schaumstoffherstellung eingesetztem Melamin-/Formaldehyd-Vorkondensat und partikelförmigen Füllmaterial bezogen sind.

Die partikelförmigen Füllmaterialien haben erfindungsgemäß einen mittleren Teilchendurchmesser von 5 µm bis 3 mm, bevorzugt 10 bis 1000 µm, besonders bevorzugt 100 bis 600 µm (d₅₀-Wert, zahlengemittelt, bestimmt mittels Licht-oder Elektronenmikroskopie in Verbindung mit Bildauswertung). Die Teilchengrößenverteilung der partikelförmigen Füllmaterialien kann mono-, bi- oder multimodal sein.
Die einzelnen Partikel der partikelförmigen Füllmaterialien können selbst aus kleineren agglomerierten Teilchen, welche oftmals als Primärpartikel bezeichnet werden, aufgebaut sein. Beispielsweise können die partikelförmigen Füllmaterialien in Form von Agglomerat-Partikeln mit den vorstehend beschriebenen Teilchendurchmessern eingesetzt werden, wobei jedes Agglomerat aus kleineren Primärpartikeln besteht. Solche in Agglomeratform vorliegenden Partikel sind dem Fachmann grundsätzlich bekannt und in der Literatur beschrieben; sie lassen sich beispielsweise durch Zugabe von Agglomerisierungshilfsmitteln zu den Primärpartikeln und anschließendes Vermischen erhalten.

Die Füllmaterialien liegen erfindungsgemäß in Partikelform vor, bevorzugt liegt das Verhältnis der längsten Raumachse zur kürzesten Raumachse der Partikel im Bereich von 4:1 bis 1:1, besonders bevorzugt sind sphärische Füllmaterialien.

Als partikelförmige Füllmaterialien kommen grundsätzlich alle dem Fachmann bekannten und in der Literatur beschriebenen anorganische Stoffe in Betracht.

Als partikelförmige anorganische Füllmaterialien eignen sich bevorzugt Quarz, Olivin, Basalt, Glaskugeln, Keramikkugeln, Tonmineralien wie beispielsweise Kaolin, Ammonium- phosphat und Phosphorsäure, Sulfate wie Ammonium-, Barium und Calciumsulfat, Carbonate wie Calciumcarbonat, und Dolomit CaMg(CO₃)₂, Kieselgur, Hydroxide wie Aluminium, Calcium und Magnesiumhydroxid, Zinkborate, Antimontrioxid und Antimonpentoxid, Silikate, wie Aluminium- und Calciumsilikat, wie Wollastonit CaSiO₃, Silimanit Al₂SiO₅, Nephelin (Na,K)AlSiO₄, Andalusit Al₂[O|SiO₄], Feldspat (Ba,Ca,Na,K,NH₄)(Al,B,Si)₄O₈, Schichtsilikate, wie Montmorillonit (Smectit) (Al,Mg,Fe)₂[(OH)₂|(Si,Al)₄O₁₀] Na_{0,33}(H₂O)₄, Vermiculit Mg₂(Al,Fe,Mg)[(OH₂|(Si,Al)₄O₁₀]. Mg_{0,35}(H₂O)₄, Allophan Al₂[SiO₅]₆O₃ n H₂O, Kaolinit Al₄[(OH)₈|Si₄O₁₀], Halloysit Al₄[(OH)₈|Si₄O₁₀] 2 H₂O, Mullit Al₈[(O,OH,F)|(Si,Al)O₄]₄, Talkum Mg₃Si₄O₁₀(OH)₂, wasserhaltige Sulfate Ca[SO₄] • 2 H₂O, Glimmer, wie z.B. Muskovit, kolloidale Kieselsäure oder deren Mischungen, bevorzugt granuläre Mineralien, wie Sande und Glaskugeln.

Die partikelförmigen Füllmaterialien können unbeschichtet oder beschichtet eingesetzt werden. Die Menge des Beschichtungsmaterial kann in weiten Grenzen variiert werden und beträgt in der Regel 1 bis 20 Gew.-%, bevorzugt 1 bis 10 Gew.-%, besonders bevorzugt 1 bis 5 Gew.-% bezogen auf das partikelförmige Füllmaterial, vorteilhaft wird die Menge des Beschichtungsmaterial minimal eingestellt, um die Beschichtung zu gewährleisten.

Als Beschichtungsmaterialien eignen sich polymere Stoffe beispielsweise Melamin-Formaldehyd-Harze. Geeignete Polyurethanharze, Polyesterharze oder Epoxidharze zur Beschichtung sind dem Fachmann bekannt. Solche Harze sind beispielsweise in Encyclopedia of Polymer Science und Technology (Wiley) unter folgenden Kapiteln zu finden: a) Polyesters, unsaturated: Edition 3, Vol. 11, 2004, S. 41-64; b) Polyurethanes: Edition 3, Vol. 4. 2003, S. 26-72 und c) Epoxy resins: Edition 3, Vol. 9, 2004, S. 678-804. Des Weiteren finden sich in Ullmann's Encyclopedia of Industrial Chemistry (Wiley) folgende Kapitel: a) Polyester resins, unsaturated: Edition 6, Vol. 28, 2003, S. 65-74; b) Polyurethanes: Edition 6, Vol. 28, 2003, S. 667-722 und c) Epoxy resins: Edition 6, Vol. 12, 2003, S. 285-303. Des Weiteren können amino- oder hydroxyfunktionalisierte Polymere, insbesondere ein Polyvinylamin oder Polyvinylalköhol eingesetzt werden. Ebenso ist es möglich anorganische Beschichtungsmaterialien auf Basis von Phosphat-, Silikat- und Boratgruppen oder Kombinationen davon einzusetzen.

Die partikelförmigen Füllmaterialien können zur besseren Anbindung an die Schaumstruktur an ihrer Oberfläche auch chemische Funktionalisierungen aufweisen. Die chemische Funktionalisierung der Oberflächen der Füllmaterialien ist dem Fachmann grundsätzlich bekannt und beispielsweise in WO2005/103107 beschrieben.

Bei den erfindungsgemäßen Melamin/-Formaldehyd-Schaumstoffen handelt es sich um ein offenzelliges Schaumstoffgerüst, welches eine Vielzahl miteinander verbundener, dreidimensional verzweigter Stege enthält und bei denen die partikelförmigen Füllstoffe in die Porenstruktur eingebettet sind. Die Partikelgröße entspricht vorzugsweise dem mittleren Porendurchmesser der Schaumstruktur, wobei dieser mittlere Porendurchmesser bevorzugt im Bereich von 10 bis 1000 µm, insbesondere im Bereich von 50 bis 600 µm liegt (d₅₀-Wert, zahlengemittelt, bestimmt mittels Licht-oder Elektronenmikroskopie in Verbindung mit Bildauswertung). Die partikelförmigen Füllstoffe können somit in idealer Weise in die Porenstruktur des offenzelligen Schaumstoffs eingebenden und von allen Seiten des Porengerüstes fixiert werden. Eine derartige Struktur kann durch nachträgliches Imprägnieren des Schaumstoffs mit Füllmaterialien nicht erzeugt werden, da hierfür die Teilchengröße der Füllstoffe immer so gewählt werden muss, dass die Teilchengröße kleiner als die Porengröße des Schaumstoffs ist, um eine Verteilung im gesamten Schaumstoff zu gewährleisten.

Die zur Herstellung der erfindungsgemäßen Melamin-Formaldehyd-Schaumstoffe eingesetzten Melamin-Formaldehyd-Vorkondensate weisen in der Regel ein Molverhältnis von Formaldehyd zu Melamin 5:1 bis 1,3:1, bevorzugt 3,5:1 bis 1,5:1 auf.

Diese Melamin/Formaldehyd-Kondensationsprodukte können neben Melamin 0 bis 50 Gew.-%, bevorzugt 0 bis 40 Gew.-%, besonders bevorzugt 0 bis 30 Gew.-%, insbesondere 0 bis 20 Gew.-% anderer Duroplastbildner und neben Formaldehyd 0 bis 50 Gew.-%, bevorzugt 0 bis 40 Gew.-%, besonders bevorzugt 0 bis 30 Gew.-%, insbesondere 0 bis 20 Gew.-% anderer Aldehyde ein kondensiert enthalten. Bevorzugt sind unmodifizierte Melamin/Formaldehyd-Vorkondensate.

Als Duroplastbildner eignen sich beispielsweise Alkyl- und Arylsubstituiertes Melamin, Harnstoff, Urethane, Carbonsäureamide, Dicyandiamid, Guanidin, Sulfurylamid, Sulfonsäureamide, aliphatische Amine, Glykole, Phenol oder deren Derivate.

Als Aldehyde eignen sich beispielsweise Acetaldehyd, Trimethylolacetaldehyd, Acrolein, Benzaldehyd, Furfural, Glyoxal, Glutaraldehyd, Phthalaldehyd, Terephthalaldehyd oder deren Gemische. Weitere Einzelheiten über Melamin/Formaldehyd-Kondensationsprodukte finden sich in Houben-Weyl, Methoden der organischen Chemie, Band 14/2, 1963, Seiten 319 bis 402.

Die erfindungsgemäßen Melamin-/Formaldehyd-Schaumstoffe lassen sich wie folgt herstellen:

Die partikelförmigen Füllmaterialien können den zur Schaumherstellung eingesetzten Einsatzstoffen, d.h. dem Melamin, dem Formaldehyd, deren Mischungen oder einem Melamin-/Formaldehyd-Vorkondensat, während des Schäumprozesses, bevorzugt aber vor dem Schäumprozess, zugefügt werden.

Bevorzugt ein Melamin-Formaldehyd-Vorkondensat und ein Lösungsmittel können mit einer Säure, einem Dispergiermittel, einem Treibmittel und partikelförmigem Füllmaterial bei Temperaturen oberhalb der Siedetemperatur des Treibmittels verschäumt und anschließend getrocknet werden.

In einer besonderen Ausführungsform werden die Füllmaterialien nach dem Fachmann bekannten Methoden vor der Zugabe zum Schäumprozeß beschichtet. Dies kann beispielsweise mittels einer Sprühvorrichtung in einer Mischvorrichtung (z.B. Intensivmischer der Fa. Eirich) erfolgen. Somit wird eine homogene Benetzung der Füllmaterialien erzielt. In einer besonderen Ausführungsform lässt man das Beschichtungsmaterial nicht vollständig aushärten, um die Anbindung im Schaumstoff zu erhöhen.

Als Melamin-/Formaldehyd-Vorkondensate eignen sich eigens hergestellte (siehe Übersichtsschriften: a) W. Woebcken, Kunststoffhandbuch 10. Duroplaste, München, Wien 1988, b) Encyclopedia of Polymer Science and Technology, 3. Aufl., Vol.1, Kap. Amino Resins, S. 340 bis 370, 2003 c) Ullmann's Encyclopedia of Industrial Chemistry, 6. Aufl., Vol. 2, Kap. Amino Resins, S. 537 bis 565. Weinheim 2003) oder handelsübliche Vorkondensate der beiden Komponenten, Melamin und Formaldehyd. Die Melamin-Formaldehyd-Vorkondensate weisen in der Regel ein Molverhältnis von Formaldehyd zu Melamin 5 : 1 bis 1,3 : 1, bevorzugt 3,5 : 1 bis 1,5 : 1 auf.

Eine bevorzugte Verfahrensvariante zur Herstellung des erfindungsgemäßen Schaumstoffes umfasst die Stufen:
- (1): Herstellen einer Suspension enthaltend ein Melamin/Formaldehyd-Vorkondensat des herzustellenden Schaumstoffs, partikelförmige Füllstoffe und gegebenenfalls weitere Zusatzkomponenten,
- (2): Aufschäumen des Vorkondensates durch Erhitzen der Suspension aus Schritt (1) auf eine Temperatur oberhalb der Siedetemperatur des Treibmittels,
- (3): Trocknen des aus Schritt (2) erhaltenen Schaumstoffs.

Die einzelnen Verfahrensschritte und die verschiedenen Variationsmöglichkeiten werden nachfolgend näher ausgeführt.

Es können bei der Herstellung des Melamin-/Formaldehyd-Vorkondensates Alkohole, beispielsweise Methanol, Ethanol oder Butanol zugesetzt werden, um teilsweise oder vollständig veretherte Kondensate zu erhalten. Durch die Bildung der Ethergruppen können die Löslichkeit des Melamin-/Formaldehyd-Vorkondensates und die mechanischen Eigenschaften des vollständig ausgehärteten Materials beeinflusst werden.

Als Dispergiermittel bzw. Emulgator können anionische, kationische und nicht ionische Tenside sowie Mischungen davon eingesetzt werden.

Geeignete anionische Tenside sind beispielsweise Diphenylenoxidsulfonate, Alkan- und Alkylbenzolsulfonate, Alkylnaphthalinsulfonate, Olefinsulfonate, Alkylethersulfonate, Fettalkohol-sulfate, Ethersulfate, α-Sulfofettsäureester, Acylaminoalkansulfonate, Acylisothionate, Alkylethercarboxylate, N-Acylsarcosinate, Alkyl- und Alkyletherphosphate. Als nicht ionische Tenside können Alkylphenolpolyglykolether, Fettalkoholpolyglykolether, Fettsäurepolyglykol-ether, Fettsäurealkanolamide, Ethylenoxid/-Propylenoxid-Blockcopolymere, Aminoxide, Glycerin-fettsäureester, Sorbitanester und Alkylpolyglykoside verwendet werden. Als kationische Emulgatoren können z.B. Alkyltriammoniumsalze, Alkylbenzyldimethylammoniumsalze und Alkylpyridiniumsalze eingesetzt werden.

Die Dispergiermittel bzw. Emulgatoren können in Mengen von 0,2 bis 5 Gew.-%, bezogen auf das Melamin-/Formaldehyd-Vorkondensat eingesetzt werden.

Die Dispergiermittel bzw. Emulgatoren und/oder Schutzkolloide können im Prinzip zu einem beliebigen Zeitpunkt zur Rohdispersion gegeben werden, sie können jedoch auch bereits in dem Lösungsmittel bei Einbringung der Mikrokapsel-Dispersion vorhanden sein.

Prinzipiell können bei dem erfindungsgemäßen Verfahren sowohl physikalische als auch chemische Treibmittel verwendet werden.

Abhängig von der Wahl des Melamin-/Formaldehyd-Vorkondensates enthält die Mischung ein Treibmittel. Dabei richtet sich die Menge des Treibmittels in der Mischung in der Regel nach der erwünschten Dichte des Schaumstoffs.

Als Treibmittel eignen sich "physikalische" oder "chemische" Treibmittel (Encyclopedia of Polymer Science and Technology, Vol. I, 3. Aufl., Kapitel Additives, Seite 203 bis 218, 2003).

Als "physikalische" Treibmittel eignen sich, beispielsweise Kohlenwasserstoffe, wie Pentan, Hexan, halogenierte, insbesondere chlorierte und/oder fluorierte Kohlenwasserstoffe, beispielsweise Methylenchlorid, Chloroform, Trichlorethan, Fluorchlorkohlenwasserstoffe, teilhalogenierte Fluorchlorkohlenwasserstoffe (H-FCKW), Alkohole, beispielsweise Methanol, Ethanol, n- oder iso-Propanol, Ether, Ketone und Ester, beispielsweise Ameisensäuremethylester, Ameisensäureethylester, Essigsäuremethylester oder Essigsäureethylester, in flüssiger Form oder Luft, Stickstoff und Kohlendioxid als Gase.

Als "chemische" Treibmittel eignen sich, beispielsweise Isocyanate im Gemisch mit Wasser, wobei als wirksames Treibmittel Kohlendioxid freigesetzt wird. Ferner sind Carbonate und Bicarbonate im Gemisch mit Säuren geeignet, welche ebenfalls Kohlendioxid erzeugen. Auch geeignet sind Azoverbindungen, wie z.B. Azodicarbonamid.

In einer bevorzugten Ausführungsform der Erfindung enthält die Mischung zusätzlich wenigstens ein Treibmittel. Dieses Treibmittel liegt in der Mischung in einer Menge von 0,5 bis 60 Gew.-%, bevorzugt 1 bis 40 Gew.-%, besonders bevorzugt 1,5 bis 30 Gew.-% bezogen auf das Melamin-/Formaldehyd-Vorkondensat, vor. Es wird bevorzugt ein physikalisches Treibmittel mit einem Siedepunkt zwischen 0 und 80°C zugesetzt.

Als Härter können saure (acide) Verbindungen eingesetzt werden, die die Weiterkondensation des Melaminharzes katalysieren. Die Menge dieser Härter beträgt in der Regel 0,01 bis 20 Gew.-%, bevorzugt 0,05 und 5 Gew.-%, jeweils bezogen auf das Vorkondensat. Geeignete saure Verbindungen sind anorganische und organische Säuren, zum Beispiel ausgewählt aus der Gruppe bestehend aus Salzsäure, Schwefelsäure, Phosphorsäure, Salpetersäure, Ameisensäure, Essigsäure, Oxalsäure, Toluolsulfonsäuren, Amidosulfonsäuren, Säureanhydride und Mischungen davon.

In einer weiteren Ausführungsform enthält die Mischung neben dem Melamin-/Formaldehyd-Vorkondensat des herzustellenden Schaumstoffes und den Füllmaterialien, auch einen Emulgator sowie gegebenenfalls einen Härter und gegebenenfalls ein Treibmittel.

In einer weiteren Ausführungsform ist die Mischung frei von weiteren Zusatzstoffen. Für manche Zwecke kann es jedoch günstig sein, 0,1 bis 20 Gew.-%, bevorzugt 0,1 bis 10 Gew.%, bezogen auf das Melamin-/Formaldehyd-Vorkondensat, an üblichen, von den partikelförmigen Füllmaterialien verschiedenen Zusatzstoffen, wie Fasern, Farbstoffe, Flammschutzmittel, UV-Stabilisatoren, Mittel zur Herabsetzung der Brandgastoxizität oder zur Förderung der Verkohlung, Duftstoffe, optische Aufheller oder Pigmente zuzusetzen. Diese Zusatzstoffe sind bevorzugt homogen in dem Schaumstoff verteilt.

Als Pigmente können beispielsweise die gängigen organischen Pigmente eingesetzt werden. Diese Pigmente können zuvor mit den Füllmaterialien vermengt werden.

Im nachfolgenden Schritt des erfindungsgemäßen Verfahrens erfolgt das Aufschäumen des Vorkondensates in der Regel durch Erhitzen der Suspension des Melamin-/Formaldehyd-Vorkondensates und der partikelförmigen Füllmaterialien, um einen Schaumstoff zu erhalten, der partikelförmige Füllmaterialien enthält. Dazu wird die Suspension in der Regel auf eine Temperatur oberhalb des Siedepunktes des verwendeten Treibmittels erwärmt und in einer geschlossenen Form verschäumt.

Bevorzugt kann der Energieeintrag durch elektromagnetische Strahlung erfolgen, beispielsweise durch Hochfrequenzbestrahlung mit 5 bis 400 kW, bevorzugt 5 bis 200 kW, besonders bevorzugt 9 bis 120 kW pro Kilogramm der eingesetzten Mischung in einem Frequenzbereich von 0,2 bis 100 GHz, bevorzugt 0,5 bis 10 GHz. Als Strahlungsquelle für dielektrische Strahlung sind Magnetrone geeignet, wobei mit einem oder mehreren Magnetronen gleichzeitig bestrahlt werden kann.

Die hergestellten Schaumstoffe werden abschließend getrocknet, wobei im Schaumstoff verbliebenes Wasser und Treibmittel entfernt wird.

Eine Nachbehandlung kann auch zur Hydrophobierung des Schaumstoffs eingesetzt werden. Bevorzugt werden hierbei hydrophobe Beschichtungsmittel eingesetzt, die eine hohe Temperaturstabilität und eine geringe Brennbarkeit aufweisen, beispielsweise Silikone, Silikonate oder fluorierte Verbindungen.

Bei dem beschriebenen Verfahren entstehen Schaumstoffblöcke bzw. -platten, die zu beliebigen Formen zurechtgeschnitten werden können.

Die Schaumstoffblöcke bzw. -platten können optional in einem weiteren Verfahrensschritt thermokomprimiert werden. Die Thermokomprimierung als solche ist dem Fachmann bekannt und beispielsweise in WO 2007/031944, EP-A 451 535, EP-A 111 860 und US-B 6,608,118 beschrieben. Durch die Thermokomprimierung kann oftmals eine bessere Fixierung der partikelförmigen Füllmaterialien an die offenzellige Schaumstruktur erreicht werden.

Die Dichte des Schaumstoffs beträgt in der Regel 5 bis 100 kg/m³, bevorzugt 10 bis 100 kg/m³, besonders bevorzugt 15 bis 85 kg/m³, besonders bevorzugt 40 bis 75 kg/m³.

Der nach dem erfindungsgemäßen Verfahren erhältliche Schaumstoff hat bevorzugt eine offenzellige Struktur mit einer Offenzelligkeit, gemessen nach DIN ISO 4590, von mehr als 50 %, insbesondere mehr als 80 %.

Der mittlere Porendurchmesser liegt bevorzugt im Bereich von 10 bis 1000 µm, insbesondere im Bereich von 50 bis 600 µm.

Der erfindungsgemäße Schaumstoff ist bevorzugt elastisch.

Der nach dem erfindungsgemäßen Verfahren erhältliche Schaumstoff kann auf vielfältige Weise zur Wärme- und Schalldämmung im Bauwesen und im Automobil-, Schiffsund Schienenfahrzeugbau, dem Bau von Raumfahrzeugen oder in der Polsterindustrie eingesetzt werden, beispielsweise zur Wärmedämmung im Hausbau oder als schalldämmendes Material, z. B. in Automobilen, Flugzeugen, Bahnen, Schiffen, etc. in Fahrtgastzellen oder im Motorraum oder zur Bepolsterung von Sitz- und Liegeflächen sowie für Rücken- und Armlehnen. Vorzugsweise liegen Anwendungsfelder in Breichen, die eine hohe Temperaturstabilität und geringe Entflammbarkeit voraussetzen, z.B. in Porenbrennern.

Für bestimmte Anwendungsbereiche kann es vorteilhaft sein, die Oberfläche der erfindungsgemäßen Schaumstoffe mit einer dem Fachmann grundsätzlich bekannten Kaschierung oder Laminierung zu versehen. Solche Kaschierungen oder Laminierungen können beispielsweise unter weitgehender Erhaltung der akustischen Eigenschaften mit sogenannten "offenen" Systemen, wie beispielsweise Lochplatten erfolgen, oder aber auch mit "geschlossenen" Systemen, beispielsweise Folien oder Platten aus Kunststoff, Metall oder Holz.

Die erfindungsgemäßen Melamin-/Formaldehyd-Schaumstoffe mit offenzelligem Schaumstoffgerüst, welches eine Vielzahl miteinander verbundener, dreidimensional verzweigter Stege enthält, und bei denen partikelförmige Füllmaterialien in die Porenstruktur eingebettet sind, und die 0,01 bis 45 Gew.-% anorganischer Stoffe als partikelförmiges Füllmaterial enthalten, können zur Erzielung bestimmter Effekte wie Verbesserung der Brandeigenschaften oder optischer Effekte -beispielsweise Farbgebung- eingesetzt werden, ohne daß eine unerwünscht hohe Abnahme der mechanischen Eigenschaften ggü. den ungefüllten Schaumstoffen zu beobachten ist.

### Beispiele:

### Vergleichsbeispiel V-A

Herstellung eines Melamin-/Formaldehyd-Schaumstoffes ohne Füllmaterialien (nach WO-A-2009/021963).

75 Gew.-Teile eines sprühgetrockneten Melamin-/Formaldehyd-Vorkondensates (Molverhältnis 1:3) wurden in 25 Gew.-Teilen Wasser gelöst, 3 Gew.-% Ameisensäure, 2 Gew.-% eines Na-C₁₂/C₁₄-Alkylsulfats, 20 Gew.-% Pentan, wobei die Gew.-% jeweils bezogen sind auf das Vorkondensat, zugesetzt, anschließend gerührt und dann in einer Form aus Polypropylen (zum Schäumen) durch Einstrahlung von Mikrowellenenergie verschäumt. Nach dem Verschäumen wurde 30 Minuten getrocknet.

Der Melamin-/Formaldehyd-Schaumstoff hat eine Dichte von 10 g/l und einen Stempeldruckwert von 21,1 N (alle Stempeldruckmessungen zur Beurteilung der mechanischen Güte der Melaminharzschaumstoffe erfolgten nach US-A-4 666 948. Dazu wurde ein zylindrischer Stempel mit einem Durchmesser von 8 mm und einer Höhe von 10 cm in eine zylindrische Probe mit dem Durchmesser von 11 cm und einer Höhe von 5 cm in Schäumrichtung bei einem Winkel von 90° gedrückt bis die Probe riß. Die Durchreißkraft [N], im folgenden auch Stempeldruckwert genannt, gibt Auskunft über die mechanische Güte des Schaumstoffs).

### Beispiel 1

Herstellung eines Melamin-/Formaldehyd-Schaumstoffes mit 10 Gew.-% Quarzsand (bezogen auf das Gesamtgewicht aus zur Schaumstoffherstellung eingesetztem Melamin-/Formaldehyd-Vorkondensat und partikelförmigen Füllmaterial) als Füllmaterial.

75 Gew.-Teile eines sprühgetrockneten Melamin-/Formaldehyd-Vorkondensates (Molverhältnis 1:3) wurden in 25 Gew.-Teilen Wasser gelöst, 3 Gew.-% Ameisensäure, 2 Gew.-% eines Na-C₁₂/C₁₄-Alkylsulfats, 20 Gew.-% Pentan, wobei die Gew.-% jeweils bezogen sind auf das Vorkondensat, und 8,3 Gew.-Teile Quarzsand (Komgröße: 0,3 bis 0,7 mm, mittlerer Teilchendurchmesser 0,5 mm (d₅₀-Wert, zahlengemittelt, bestimmt mittels Licht- oder Elektronenmikroskopie in Verbindung mit Bildauswertung)) zugesetzt, anschließend gerührt und dann in einer Form aus Polypropylen (zum Schäumen) durch Einstrahlung von Mikrowellenenergie verschäumt. Nach dem Verschäumen wurde 30 Minuten getrocknet.

Der Schaumstoff hat eine Dichte von 6,6 g/l und einen Stempeldruckwert von 20,8 N.

### Beispiele 2-6

Analog zu Beispiel 1 wurden weitere Schäume mit höheren Gehalten an Quarzsand hergestellt.

Die Ergebnisse sind in nachfolgender Tabelle 1 zusammengestellt:

**Tabelle 1:**

| Bsp. | Gehalt Quarzsand [Gew.-%]* | Dichte [g/L] | Stempeldruckwert [N] |
|---|---|---|---|
| V-A | 0 | 10 | 21,1 |
| 1 | 10 | 6,6 | 20,8 |
| 2 | 20 | 7,2 | 21,0 |
| 3 | 40 | 8,5 | 20,7 |
| V-4 | 60 | 11 | 15,4 |
| V-5 | 80 | 12,3 | 13,3 |
| V-6 | 100 | 12,5 | 11,3 |

| | | | |
|---|---|---|---|
| * bezogen auf das Gesamtgewicht aus zur Schaumstoffherstellung eingesetztem Melamin-/Formaldehyd-Vorkondensat und partikelförmigen Füllmaterial. | | | |

### Beispiel 7

Herstellung eines Melamin-/Formaldehyd-Schaumstoffes mit 10 Gew.-% Glasperlen (bezogen auf das Gesamtgewicht aus zur Schaumstoffherstellung eingesetztem Melamin-/Formaldehyd-Vorkondensat und partikelförmigen Füllmaterial) als Füllmaterial.

75 Gew.-Teile eines sprühgetrockneten Melamin-/Formaldehyd-Vorkondensates (Molverhältnis 1:3) wurden in 25 Gew.-Teilen Wasser gelöst, 3 Gew.-% Ameisensäure, 2 Gew.-% eines Na-C₁₂/C₁₄-Alkylsulfats, 20 Gew.-% Pentan, wobei die Gew.-% jeweils bezogen sind auf das Vorkondensat, und 8,3 Gew.-Teile Glasperlen Type Microbeads (0,4 bis 0,8 mm, Sigmund Lindner GmbH, mittlerer Teilchendurchmesser 0,6 mm (d₅₀-Wert, zahlengemittelt, bestimmt mittels Licht- oder Elektronenmikroskopie in Verbindung mit Bildauswertung)) zugesetzt, anschließend gerührt und dann in einer Form aus Polypropylen (zum Schäumen) durch Einstrahlung von Mikrowellenenergie verschäumt. Nach dem Verschäumen wurde 30 Minuten getrocknet.

Der Schaumstoff hat eine Dichte von 6,8 g/l und einen Stempeldruckwert von 21,0 N.

### Beispiele 8-12:

Analog zu Beispiel 7 wurden weitere Schäume mit höheren Gehalten an, Glaskugeln hergestellt.

Die Ergebnisse sind in nachfolgender Tabelle 2 zusammengestellt:

**Tabelle 2:**

| Bsp. | Gehalt Glaskugeln [Gew.-%]* | Dichte [g/L] | Stempeldruckwert [N] |
|---|---|---|---|
| V-A | 0 | 10 | 21,1 |
| 7 | 10 | 6,8 | 21,0 |
| 8 | 20 | 7,4 | 21,5 |
| 9 | 40 | 8,6 | 21,1 |
| V-10 | 60 | 11,3 | 15,9 |
| V-11 | 80 | 12,7 | 12,8 |
| V-12 | 100 | 13,1 | 11,1 |

| | | | |
|---|---|---|---|
| * bezogen auf das Gesamtgewicht aus zur Schaumstoffherstellung eingesetztem Melamin-/Formaldehyd-Vorkondensat und partikelförmigen Füllmaterial. | | | |

Die Beispiele belegen, daß bei den erfindungsgemäßen Melamin-/Formaldehyd-Schaumstoffen mit offenzelligem Schaumstoffgerüst, welches eine Vielzahl miteinander verbundener, dreidimensional verzweigter Stege enthält, und bei denen partikelförmige Füllmaterialien in die Porenstruktur eingebettet sind, enthaltend 0,01 bis 45 Gew.-% anorganischer Stoffe als partikelförmiges Füllmaterial, trotz verbesserter Brandeigenschaften die guten mechanischen Eigenschaften der ungefüllten Schaumstoffe weitgehend erhalten bleiben, bei bekannten höhergefüllten Schäumen die mechanischen Eigenschaften sich aber sprunghaft verschlechtern.

## Patentansprüche

1. Melamin-/Formaldehyd-Schaumstoffe mit offenzelligem Schaumstoffgerüst, welches eine Vielzahl miteinander verbundener, dreidimensional verzweigter Stege enthält und bei denen partikelförmige Füllmaterialien In die Porenstruktur eingebettet sind, **dadurch gekennzeichnet, dass** diese 0,01 bis 45 Gew.-% eines partikelförmigen Füllmaterials mit einem mittleren Teilchendurchmesser im Bereich von 5 µm bis 3 mm enthalten und als partikelförmiges Füllmaterial anorganische Stoffe eingesetzt werden, wobei die Gew.-% auf das Gesamtgewicht aus zur Schaumstoffherstellung eingesetztem Melamin-/Formaldehyd-Vorkondensat und Füllmaterial bezogen sind.

2. Melamin-/Formaldehyd-Schaumstoffe nach Anspruch 1, **dadurch gekennzeichnet, dass** diese 1 bis 30 Gew.-% des partikelförmigen Füllmaterials enthalten, wobei die Gew.-% auf das Gesamtgewicht aus zur Schaumstoffherstellung eingesetztem Melamin-/Formaldehyd-Vorkondensat und Füllmaterial bezogen sind.

3. Melamin-/Formaldehyd-Schaumstoffe nach Anspruch 1 oder 2, **dadurch gekennzeichnet, dass** die partikelförmigen Füllmateriallen mittlere Teilchendurchmesser im Bereich von 10 µm bis 1000 µm haben.

4. Melamin-/Formaldehyd-Schaumstoffe nach einem der Ansprüche 1 bis 3, **dadurch gekennzeichnet, dass** als partikelförmiges Füllmaterial Quarz. Olivin, Basalt, Glaskugeln, Keramikkugeln, Tonmineralien, Sulfate, Carbonate, Kleselgur, Silikate, kolloidale Kleselsäure oder deren Mischungen eingesetzt werden.

5. Melamin-/Formaldehyd-Schaumstoffe nach einem der Ansprüche 1 bis 4, **dadurch gekennzeichnet, dass** die partikelförmigen Füllmaterialien in die Porenstruktur des Schaumstoffs eingebettet sind und der mittlere Teilchendurchmesser dem mittleren Porendurchmesser der Schaumstruktur entspricht.

6. Verfahren zur Herstellung der Melamin-/Formaldehyd-Schaumstoffe nach einem der Ansprüche 1 bis 5, **dadurch gekennzeichnet, dass** man Melamin-Formaldehyd-Vorkondensate in einem Lösungsmittel mit einer Säure, einem Dispergiermittel, einem Treibmittel und partikelförmigem Füllmaterial bei Temperaturen oberhalb der Siedetemperatur des Treibmittels verschäumt und anschließend trocknet.

7. Verwendung der Melamin-/Formaldehyd-Schaumstoffe nach einem der Ansprüche 1 bis 5 zur Wärme- und Schalldämmung im Bauwesen, im Automobil-, Schiffs- und Schienenfahrzeugbau, dem Bau von Raumfahrzeugen oder In der Polsterindustrie.

## Claims

1. A melamine-formaldehyde foam with open-cell foam structure, which contains a plurality of interconnected, three-dimensionally branched webs and in which particulate filling materials are embedded into the pore structure, **characterized in that** said melamine-formaldehyde foam comprises from 0.01% to 45% by weight of a particulate filling material having an average particle diameter in the range from 5 µm to 3 mm and inorganic materials are used as particulate filing material, wherein the % by weight are based on the total weight of filling material plus melamine-formaldehyde precondensate used for foam production.

2. The melamine-formaldehyde foam according to claim 1 **characterized in that** it comprises from 1% to 30% by weight of the particulate filling material, wherein the % by weight are based on the total weight of filling material plus melamine-formaldehyde precondensate used for foam production.

3. The melamine-formaldehyde foam according to claim 1 or 2 **characterized in that** the particulate filling materials have average particle diameters in the range from 10 µm to 1000 µm.

4. The melamine-formaldehyde foam according to any one of claims 1 to 3 **characterized in that** the particulate filling material used comprises quartz, olivine, basalt, glass spheres, ceramic spheres, clay minerals, sulfates, carbonates, kieselguhr, silicates, colloidal silica or mixtures thereof.

5. The melamine-formaldehyde foam according to any one of claims 1 to 4 **characterized in that** the particulate filling materials are embedded into the pore structure of the foam and the average particle diameter corresponds to the average pore diameter of the foam structure.

6. A process for producing the melamine-formaldehyde foam according to any one of claims 1 to 5, **characterized in that** it comprises a melamine-formaldehyde precondensate being foamed in a solvent with an acid, a dispersant, a blowing agent and particulate filling material at temperatures above the boiling temperature of the blowing agent and subsequently dried.

7. The use of the melamine-formaldehyde foam according to any one of claims 1 to 5 for thermal and acoustical insulation in building construction, automobile, ship and track vehicle construction, the construction of spacecraft or in the upholstery industry.

## Revendications

1. Mousses de mélamine/formaldéhyde à squelette de mousse à cellules ouvertes, qui contient une pluralité de traverses ramifiées tridimensionnellement reliées les unes avec les autres et dans lequel des matériaux de remplissage particulaires sont incorporés dans la structure poreuse, **caractérisées en ce que** celles-ci contiennent 0,01 à 45 % en poids d'un matériau de remplissage particulaire ayant un diamètre de particule moyen dans la plage allant de 5 µm à 3 mm et des substances inorganiques sont utilisées en tant que matériau de remplissage particulaire, les % en poids se rapportant au poids total du précondensat de mélamine/formaldéhyde utilisé pour la fabrication des mousses et du matériau de remplissage.

2. Mousses de mélamine/formaldéhyde selon la revendication 1, **caractérisées en ce que** celles-ci contiennent 1 à 30 % en poids du matériau de remplissage particulaire, les % en poids se rapportant au poids total du précondensat de mélamine/formaldéhyde utilisé pour la fabrication des mousses et du matériau de remplissage.

3. Mousses de mélamine/formaldéhyde selon la revendication 1 ou 2, **caractérisées en ce que** les matériaux de remplissage particulaires ont des diamètres de particule moyens dans la plage allant de 10 µm à 1 000 µm.

4. Mousses de mélamine/formaldéhyde selon l'une quelconque des revendications 1 à 3, **caractérisées en ce que** du quartz, de l'olivine, du basalte, des billes de verre, des billes de céramique, des minéraux argileux, des sulfates, des carbonates, des diatomées, des silicates, de la silice colloïdale ou leurs mélanges sont utilisés en tant que matériau de remplissage particulaire.

5. Mousses de mélamine/formaldéhyde selon l'une quelconque des revendications 1 à 4, **caractérisées en ce que** les matériaux de remplissage particulaires sont incorporés dans la structure poreuse de la mousse et le diamètre de particule moyen correspond au diamètre de pore moyen de la structure de la mousse.

6. Procédé de fabrication des mousses de mélamine/formaldéhyde selon l'une quelconque des revendications 1 à 5, **caractérisé en ce que** des précondensats de mélamine/formaldéhyde sont moussés dans un solvant avec un acide, un dispersant, un agent gonflant et un matériau de remplissage particulaire à des températures supérieures à la température d'ébullition de l'agent gonflant, puis séchés.

7. Utilisation des mousses de mélamine/formaldéhyde selon l'une quelconque des revendications 1 à 5 pour l'isolation thermique et acoustique dans des bâtiments, dans la construction d'automobiles, de navires et de véhicules ferroviaires, dans la construction de véhicules spatiaux ou dans l'industrie du rembourrage.
